# EUROPÄISCHE PATENTSCHRIFT

(11) **EP 2 348 373 B1**
(45) Veröffentlichungstag und Bekanntmachung des Hinweises auf die Patenterteilung: **06.01.2016**
(21) Anmeldenummer: 11000190.6
(22) Anmeldetag: 12.01.2011
(51) Int. Cl.: G05B 19/418, G06F 11/34, G01R 31/317, G05B 23/02

(54) **Verfahren, elektronisches Bauteil und System zur Diagnose von Kommunikationsverbindungen**
Method, electronic component and system for diagnosing communication connections
Procédé, composant électronique et système pour le diagnostique de liaisons de communication

(30) Priorität: 14.01.2010 DE 102010004745
(43) Veröffentlichungstag der Anmeldung: 27.07.2011
(73) Patentinhaber: Phoenix Contact GmbH & Co. KG, 32825 Blomberg (DE)
(72) Erfinder: Pape, Andreas, 33034 Brakel (DE); Behr, Thorsten, 32805 Horn-Bad Meinberg (DE); Wegener, Friedrich, 37647 Vahlbruch (DE)
(74) Vertreter: Kampfenkel, Klaus

(56) Entgegenhaltungen:
- EP-A1- 0 573 357
- EP-A1- 1 251 416
- EP-A1- 1 703 650
- EP-A2- 0 599 606
- WO-A1-2004/030275
- DE-A1- 19 752 792
- US-B1- 6 298 454

## Beschreibung

Die Erfindung betrifft allgemein die Datenübertragung und insbesondere ein Verfahren, ein elektronisches Bauteil und ein System zur Diagnose von Kommunikationsverbindungen.

Systeme zur Diagnose von Kommunikationsverbindungen sind bekannt, wie beispielsweise aus dem Ethernet-Bereich bekannte Systeme, die Kupfer-Verbindungen oder optische Faser-Verbindungen, im Folgenden auch als LWL (Lichtwellenleiter)-Verbindungen bezeichnet, auf Paketlängen, Anzahl fehlerhafter Datenpakete oder andere Größen analysieren und die Daten über ein geeignetes Diagnose-Interface, wie beispielsweise einen integrierten Web-Server oder SNMP (Simple Network Management Protocol) zur Verfügung stellen. Solche Systeme werden beispielsweise auch zur LWL-Diagnose bei Interbus oder zur Diagnose von Bluetooth-Funkverbindungen eingesetzt, wobei typischerweise nicht allein Fehler bewertet werden, sondern auch Aussagen über Sende- und Empfangsleistungen der Kommunikationssignale möglich sind.

Aus DE 101 19 151 A1 ist beispielsweise eine Diagnose-Einrichtung für einen Feldbus mit steuerungsunabhängiger Informationsübermittlung bekannt, bei der die Übertragung von Diagnosedaten über den SPS-I/0-Bus und die in der SPS (Speicherprogrammierbare Steuerung) vorhandenen Schnittstellen erfolgt.

Alle solche Systeme beschränken sich - wie im Fall der Ethernet-Diagnose - auf reines Zählen der Fehler, oder lassen voreilend wie im Fall der Interbus-LWL- und der Bluetooth-Funk-Diagnose Schlüsse auf noch bevorstehende Fehler oder Ursachen von bereits aufgetretenen Fehlern zu.

Allen Systemen ist gemeinsam, dass sie sich bezogen auf die Grenzwerte für die Diagnosedaten, die für einen fehlerfreien Betrieb der Kommunikationsverbindung notwendig sind, ausschließlich an echten "Worst Case"-Grenzwerten orientieren, welche das Ausmaß der Abweichung einer Größe vom Normalzustand bezeichnen, das die Funktion des Systems eben noch nicht gefährdet. Innerhalb der Worst-Case-Grenzwerte für bestimmte Meßgrößen oder aus diesen Meßgrößen abgeleitete Größen ist dementsprechend typischerweise eine fehlerfreie Funktion des jeweiligen Systems gewährleistet.

In WO 2004/030275 A1 wird ein Kommunikationssystem beschrieben, bei welchem die Teilnehmer eine Diagnoseeinheit zur Diagnose von Daten, die den Datenaustausch wenigstens einer Kommunikationsverbindung zwischen wenigstens zwei Teilnehmern betreffen, aufweisen. Die Diagnoseeinheit kann eine Auswerteeinheit zur Auswertung der diagnostizierten Daten umfassen, sowie einen Pufferspeicher zur Zwischenspeicherung der Daten, wobei für Echtzeitkommunikation insbesondere eine individuelle, mit einem Zeitstempel versehene Aufzeichnung von Ereignissen bezüglich einzelner Telegramme, also spezifischer einzelner Transaktionen, vorgesehen ist. Ferner ist vorzugsweise eine zentrale Diagnosestation zur Abrufung und/oder Auswertung der durch die jeweiligen Diagnoseeinheiten aufgezeichneten Daten vorgesehen. Falls als Ergebnis der Auswertungen neue bzw. andere Diagnoseinformationen notwendig sind, können die Diagnoseeinheiten der einzelnen Netzknoten von der zentralen Diagnosestation neu konfiguriert werden, um andere Diagnosedaten zu liefern. Die Auswertung der Daten kann das Erstellen von Statistiken umfassen, beispielsweise über die Nachrichten- bzw. Kommunikationsbelastung in einer Zeiteinheit bzw. zu bestimmten Zeitpunkten, über die Anzahl empfangener bzw. gesendeter Telegramme pro Zeiteinheit, oder über die Anzahl fehlerhafte Telegramme pro Zeiteinheit.

Bestimmte Fehler, wie beispielsweise eine schlechte Stecker-Konfektionierung oder schlechte Kabelverlegung, können derart sein, dass diese bei einer auf Worst-Case-Grenzwerten basierenden Analyse nicht erkannt werden, da die Fehler zunächst nur eine geringe Beeinträchtigung der Übertragungsqualität bewirken.

Der Erfindung liegt daher die Aufgabe zugrunde, einen Weg aufzuzeigen, wie die Diagnose von Kommunikationsverbindungen verbessert werden kann. Insbesondere besteht die Aufgabe der Erfindung darin aufzuzeigen, wie Fehler in einem Kommunikationssystem erkannt werden können, die bei einer auf Worst-Case-Grenzwerten basierenden Analyse typischerweise nicht erkannt werden.

Diese Aufgabe wird durch ein Verfahren gemäß Anspruch 1, ein elektronisches Bauteil gemäß Anspruch 9, sowie ein System gemäß Anspruch 10 gelöst. Vorteilhafte Ausführungsformen und Weiterbildungen sind Gegenstand der jeweiligen Unteransprüche.

Die Erfinder haben erkannt, dass sich viele mögliche Fehler in einem Kommunikationssystem innerhalb der Worst-Case-Grenzen des Systems "verstecken" können. Solche Fälle können auftreten, da typische Komponenten wie beispielsweise LWL-Sender, LWL-Empfänger oder LWL-Kabel in der Regel deutlich besser sind als die spezifizierten Grenzwerte, so dass ein Fehler bei einer Komponente, wie beispielsweise eine schlechte Steckerkonfektionierung an einem LWL-Kabel, durch besonders gute Sender und Empfänger "versteckt" werden kann. Dies führt zwar in der Regel zunächst nicht zu einem Problem, da die Strecke in einem sicheren Bereich betrieben wird, aber der Fehler kann mit einer Worst-Case-Betrachtung nicht gefunden werden und kann zu einem späteren Ausfall der Strecke bzw. der Kommunikationsverbindung führen.

Um diese möglichen Fehler zu erkennen, sieht die Erfindung vor, auf die Diagnosedaten ein statistisches, mathematisches Verfahren anzuwenden, um vorzugsweise neue, besser an die Realität angepasste Grenzwerte zu ermitteln.

Dementsprechend umfasst ein erfindungsgemäßes Verfahren zur Diagnose von Kommunikationsverbindungen in einem Kommunikationssystem das Bereitstellen einer Vielzahl von ersten Diagnoseeinheiten und wenigstens einer zweiten Diagnoseeinheit, wobei die ersten und zweiten Diagnoseeinheiten jeweils wenigstens einer Kommunikationsverbindung des Kommunikationssystems zugeordnet und dazu ausgebildet sind, einen Wert wenigstens einer Diagnosegröße der jeweils zugeordneten Kommunikationsverbindungen zu ermitteln, das Ermitteln eines Wertes wenigstens einer Diagnosegröße durch jede der ersten Diagnoseeinheiten, das Ermitteln eines Wertes wenigstens einer Diagnosegröße durch die wenigstens eine zweite Diagnoseeinheit, das Übertragen der durch die ersten Diagnoseeinheiten ermittelten Werte zu einer Auswerteeinheit, das statistische Auswerten der übertragenen Werte durch die Auswerteeinheit, und eine Diagnose der durch die wenigstens eine zweite Diagnoseeinheit ermittelten Werte in Abhängigkeit der statistischen Auswertung durch die Auswerteeinheit.

Die Kommunikationsverbindungen des Kommunikationssystems können je nach Einsatzzweck drahtlos oder drahtgebunden sein und beispielsweise eine optische Faser oder ein Kupferkabel umfassen. Die Kommunikation innerhalb des Kommunikationssystems kann beispielsweise auf einem der Standards Ethernet, Interbus oder Bluetooth basieren. Es kann jedoch auch jeder andere geeignete Kommunikations-Standard eingesetzt werden.

Die statistische Auswertung wird in vorteilhafter Weise durch die Standard-Diagnosesoftware von für die Art des jeweiligen Kommunikationssystems verfügbarer Diagnoseeinheiten durchgeführt.

Das statistische Auswerten durch die Auswerteinheit umfasst das Ermitteln eines oberen und/oder unteren Grenzwertes für wenigstens eine Diagnosegröße und die Diagnose das Vergleichen der durch die wenigstens eine zweite Diagnoseeinheit ermittelten Werte mit dem oberen und/oder unteren Grenzwert.

Vorteilhaft wird als oberer bzw. unterer Grenzwert für die wenigstens eine Diagnosegröße ein Wert ermittelt, unter bzw. über welchem ein vorgegebener Anteil der durch die ersten Diagnoseeinheiten ermittelten Werte der jeweiligen Diagnosegröße liegen. Je nach Fehlerart und betrachteter Diagnosegröße liegt der vorgegebene Anteil bevorzugt unter 100 %, insbesondere unter 95 %, insbesondere unter 90 %, insbesondere unter 85 %, insbesondere unter 80 %.

Dementsprechend liefert die statistische Auswertung vorteilhaft als Grenzwert einen Wert, den ein vorgegebener Anteil, beispielsweise 80 %, aller installierten Kommunikationsverbindungen einhalten. Werte, die jenseits eines solchen Grenzwertes liegen, befinden sich zwar typischerweise noch innerhalb der durch Worst-Case-Grenzwerte definierten Systemspezifikation, mit einer sehr hohen Wahrscheinlichkeit handelt es sich aber um fehlerhafte Kommunikationsverbindungen.

Bevorzugt kann das statistische Auswerten durch die Auswerteinheit auch das Ermitteln eines Durchschnittswertes wenigstens einer Diagnosegröße umfassen.

Um eine solche Auswertung durchzuführen, nimmt die Einrichtung, welche die Auswerteeinheit umfasst, vorzugsweise alle ermittelten Diagnosedaten aller zur Verfügung stehenden Kommunikationsverbindungen des Kommunikationssystems in eine Datenbank auf. Besonders vorteilhaft werden kontinuierlich neue Kommunikationsverbindungen in die Auswertung mit einbezogen.

Dementsprechend sieht das Verfahren bevorzugt vor, das Ermitteln und Übertragen der Diagnosedaten, sowie das statistische Auswerten und die Diagnose in vorgegebenen Zeitabständen und/oder bei einer Änderung der Konfiguration des Kommunikationssystems wiederholt auszuführen.

Auf diese Weise ändern sich in vorteilhafter Weise die durch das statistische Auswerten ermittelten Grenz- und/oder Durchschnittswerte im Laufe der Zeit und liefern so ein Abbild der realen Verhältnisse im Kommunikationssystem - wesentlich besser als dies mit Worst-Case-Grenzwerten der Fall ist. Bei Duplex-Kommunikationsverbindungen, die typischerweise zum Beispiel bei Ethernet, Interbus oder auch bei drahtlosen Verbindungen eingesetzt werden, werden besonders bevorzugt die Diagnosedaten beider Kommunikationsrichtungen derselben Kommunikationsverbindung, also zum Beispiel der Hin- und Rückleitung desselben LWL-Kabels, miteinander verglichen. Eine starke Abweichung der Diagnosewerte der beiden Richtungen voneinander lassen in vorteilhafter Weise auf Fehler schließen, da Unterschiede im selben Übertragungsweg aufgrund identischer Umgebungsbedingungen und geringer Streuungen von Kommunikationsparametern zum Beispiel innerhalb eines Kabels unwahrscheinlich sind.

Dementsprechend sieht das Verfahren vorteilhaft vor, für wenigstens eine Duplex-Kommunikationsverbindung mit einer ersten und einer zweiten Datenrichtung für die erste Datenrichtung einen ersten Wert und für die zweite Datenrichtung einen zweiten Wert wenigstens einer Diagnosegröße zu ermitteln, wobei die Diagnose das Vergleichen des ersten und zweiten Wertes miteinander und/oder mit einem durch das statistische Auswerten ermittelten oberen und/oder unteren Grenzwert und/oder Durchschnittswert umfasst.

Mögliche Diagnosegrößen für verschiedene Übertragungssysteme umfassen die Sendeleistung und die Empfangsleistung beispielsweise einer LWL- oder Funk-Verbindung, die Streckenlänge der jeweiligen Kommunikationsverbindung, eine Bitfehlerrate, eine Prüfsummenfehlerrate, die Dämpfung des Signals durch das Übertragungsmedium, eine mögliche Übertragungsbandbreite, sowie zeitliche Änderungen der genannten möglichen Diagnosegrößen. Die Änderungsgeschwindigkeit bestimmter Diagnosegrößen erlaubt Rückschlüsse auf eine außergewöhnliche Alterung von Systemkomponenten. Das eine Dämpfung bewirkende Übertragungsmedium ist bei einer optischen Übertragung der entsprechende LWL und bei einer Funkübertragung die Luft.

Bei optischen Fasern, welche eine Tiefpaß-Charakteristik aufweisen, entspricht die Bandbreite derjenigen Modulationsfrequenz, bei der die Lichtleistung verglichen zum Wert bei der Frequenz Null um 50 % bzw. 3 dB optisch abgefallen ist.

Die Auswerteeinheit kann für eine zentrale Fehlerüberwachung vorteilhaft in einer zentralen Einrichtung des Kommunikationssystems angeordnet sein. In einer weiteren bevorzugten Ausführungsform ist die Auswerteeinheit in der zweiten Diagnoseeinheit angeordnet, so dass die statistische Auswertung direkt in der Diagnoseeinheit erfolgt. Besonders vorteilhaft kann auch jede der im Kommunikationssystem eingesetzten Diagnoseeinheiten eine Auswerteeinheit umfassen und eine statistische Auswertung der von den jeweils anderen Diagnoseeinheiten ermittelten Diagnosedaten und in Abhängigkeit davon eine Diagnose der von ihr selbst ermittelten Diagnosedaten durchführen.

Das Verfahren ist dazu ausgebildet, vorgegebene Fehlerarten zu erkennen, die typischerweise durch eine Worst-Case-Analyse nicht erkannt werden. Zu diesem Zweck wird vorzugsweise zur Diagnose einer vorgegebenen Fehlerart für wenigstens eine Diagnosegröße ein Grenzwert für die Abweichung von einem durch das statistische Auswerten ermittelten Durchschnittswertes der jeweiligen Diagnosegröße definiert.

Ein erfindungsgemäßes elektronisches Bauteil ist zur Durchführung des oben beschriebenen Verfahren ausgebildet und umfasst eine Empfangseinheit zum Empfangen von Werten wenigstens einer Diagnosegröße einer Vielzahl von Kommunikationsverbindungen eines Kommunikationssystems, einen Speicher zum Speichern der empfangenen Werte, und eine Auswerteeinheit zum statistischen Auswerten aller empfangenen Werte und zur Diagnose der empfangenen Werte wenigstens einer ausgewählten Kommunikationsverbindung in Abhängigkeit der statistischen Auswertung.

Ein erfindungsgemäßes Kommunikationssystem ist zur Durchführung des oben beschriebenen Verfahrens ausgebildet und umfasst eine Vielzahl von Kommunikationsverbindungen, eine Vielzahl von Diagnoseeinheiten, die jeweils wenigstens einer der Kommunikationsverbindungen zugeordnet und dazu ausgebildet sind, einen Wert wenigstens einer Diagnosegröße der jeweils zugeordneten Kommunikationsverbindungen zu ermitteln, und wenigstens eine Auswerteeinheit, wobei die Diagnoseeinheiten dazu ausgebildet sind, ermittelte Werte der wenigstens einen Diagnosegröße zu der wenigstens einen Auswerteeinheit zu übertragen und die Auswerteeinheit zum statistischen Auswerten aller empfangenen Werte und zur Diagnose der empfangenen Werte wenigstens einer ausgewählten Kommunikationsverbindung in Abhängigkeit der statistischen Auswertung ausgebildet ist.

Das elektronische Bauteil und das Kommunikationssystem sind ferner vorzugsweise zur Durchführung der oben beschriebenen vorteilhaften und/oder bevorzugten Ausgestaltungen des erfindungsgemäßen Verfahrens ausgebildet.

Die Erfindung wird nachfolgend anhand bevorzugter Ausführungsformen und unter Bezugnahme auf die beigefügten Zeichnungen näher beschrieben. Dabei bezeichnen gleiche Bezugszeichen in den Zeichnungen gleiche oder ähnliche Teile.

Es zeigen:
- Fig. 1: schematisch eine bevorzugte Ausführungsform eines erfindungsgemäßen, beispielhaft auf dem Interbus-Standard basierenden Kommunikationssystems, und
- Fig. 2: eine schematische Darstellung einer beispielhaften Ausführungsform einer Diagnoseeinheit.

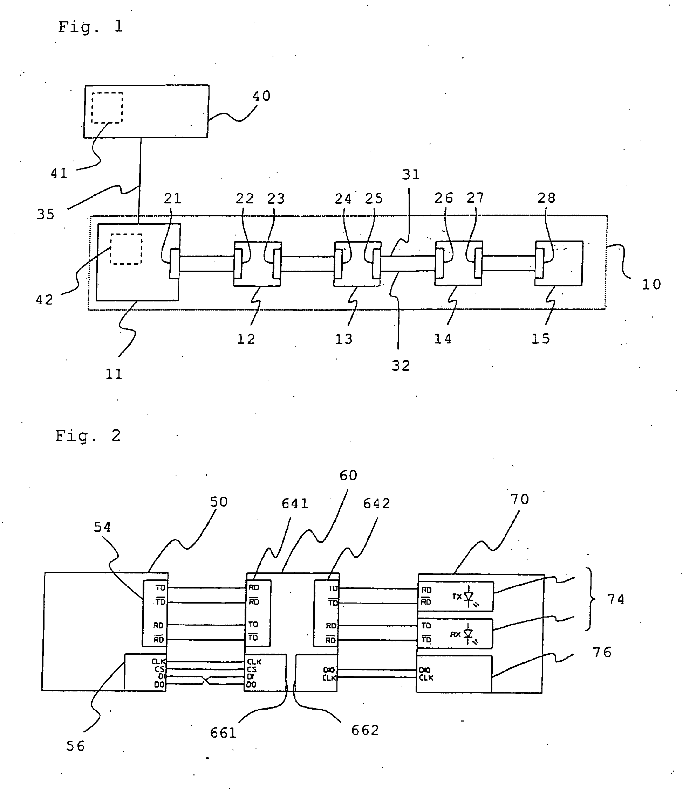

In Fig. 1 ist ein beispielhaftes Kommunikationssystem 10 dargestellt, welches beispielsweise als Interbus-System ausgebildet ist, das als Busteilnehmer einen Master 11 umfasst, an den die Slaves 12, 13, 14 und 15 angeschlossen sind. Im dargestellten Beispiel sind benachbarte Busteilnehmer jeweils über optische Duplex-Verbindungen miteinander verbunden. Jede optische Duplex-Verbindung umfasst zwei LWL-Verbindungen, die exemplarisch für die Verbindung zwischen den Busteilnehmern 13 und 14 mit den Bezugszeichen 31 und 32 bezeichnet sind. In den Busteilnehmern sind eine Vielzahl von Diagnoseeinheiten 21 bis 28 angeordnet, wobei jeder Diagnoseeinheit wenigstens eine LWL-Verbindung zugeordnet ist und wobei die Diagnoseeinheiten jeweils dazu ausgebildet sind, wenigstens eine vorgegebene Diagnosegröße, wie beispielsweise die Sende- oder Empfangsleistung oder die Bandbreite einer zugeordneten LWL-Verbindung zu überwachen und entsprechende Diagnosedaten an eine Auswerteeinheit zu übertragen.

Eine Auswerteeinheit 42, welche die Diagnosedaten von den Diagnoseeinheiten 21 bis 28 empfängt und diese statistisch auswertet, kann vorzugsweise im Master 11 angeordnet sein. Alternativ oder zusätzlich kann auch eine Auswerteeinheit 41 in einer zentralen Einrichtung 40 eines dem Kommunikationssystem 10 überlagerten Kommunikationssystems angeordnet sein, wobei die zentrale Einrichtung die Diagnosedaten der Diagnoseeinheiten 21 bis 28 über eine Verbindung 35 mit dem Master 11 empfängt, wobei die Datenverbindung 35 nur der Einfachheit halber als direkte Kommunikationsverbindung dargestellt ist. Der Master 11 kann auch über ein nicht dargestelltes, überlagertes Kommunikationsnetzwerk mit der zentralen Einrichtung 40 verbunden sein.

In einer weiteren bevorzugten Ausführungsform können auch eine, mehrere oder alle der in dem Kommunikationssystem 10 angeordneten Diagnoseeinheiten 21 bis 28 die Diagnosedaten der jeweils anderen Diagnoseeinheiten empfangen und eine Auswerteeinheit zur statistischen Auswertung der Diagnosedaten umfassen.

Die Auswerteinheit 41, 42 bzw. eine in einer Diagnoseeinheit angeordnete Auswerteeinheit wertet die empfangenen Diagnosedaten statistisch aus und führt eine Diagnose der durch wenigstens eine der Diagnoseeinheiten 21 bis 28 ermittelten Werte in Abhängigkeit eines Ergebnisses der statistischen Auswertung durch. Als Ergebnis der statistischen Auswertung wird vorzugsweise wenigstens ein Grenzwert oder ein Durchschnittswert für wenigstens eine Diagnosegröße ermittelt, mit dem die Diagnosedaten einer ausgewählten Diagnoseeinheit verglichen werden.

Besonders vorteilhaft erfolgt die statistische Auswertung und Diagnose der Diagnosedaten wiederholt in vorgegebenen zeitlichen Abständen, so dass eine dynamische Fehlerüberwachung erzielt wird, die sich automatisch an Konfigurationsänderungen des Kommunikationssystems 10 anpasst.

Die Erfindung sieht somit eine "selbstlernende" statistische Auswertung von Diagnosedaten vor, die zu einer besseren Fehleraufdeckung entscheidend beiträgt. Dies wird im Folgenden an zwei Beispielen beschrieben.

Im ersten Beispiel liegen die Diagnosedaten einer LWL-Duplexverbindung, beispielsweise umfassend die LWL-Verbindungen 31 und 32, noch innerhalb der Worst-Case-Grenzwerte, wobei die überwachten Diagnosegrößen beispielsweise eine Regelstufe und eine Bandbreite der LWL-Verbindungen 31 und 32 umfassen. Die statistische Auswertung ergibt jedoch einen signifikanten Unterschied in den Regelstufen zwischen den beiden LWL-Verbindungen 31 und 32, wobei die Regelstufe der einen Ader, beispielsweise der LWL-Verbindung 31, oberhalb des typischen Wertes liegt, den die Diagnosesoftware der Auswerteeinheit selbständig aus den in einer Datenbank gespeicherten Diagnosedaten aller Diagnoseeinheiten ermittelt hat, wobei eine erhöhte Regelstufe gleichbedeutend ist mit einer erhöhten Dämpfung. Die durchgeführte Bandbreitendiagnose liefert für die Strecke 31 mit der erhöhten Dämpfung eine deutlich kleinere Bandbreite als für die andere Strecke 32 der Duplex-Leitung. Dieses Fehlerbild lässt mit einer hohen Wahrscheinlichkeit auf einen schlecht konfektionierten Stecker an der Duplex-Leitung schließen. Für dieses Fehlerbild ist daher vorteilhaft zur automatischen Erkennung ein entsprechendes Fehlerprofil in der Auswerteeinheit hinterlegt. Eine Bewertung allein auf der Basis von Worst-Case-Grenzwerten würde im dargestellten Beispiel zu keiner Fehleraufdeckung führen.

Im zweiten Beispiel liegen die Diagnosedaten einer LWL-Duplexverbindung, beispielsweise umfassend die LWL-Verbindungen 31 und 32, wiederum noch innerhalb der Worst-Case-Grenzwerte, wobei die überwachten Diagnosegrößen wiederum beispielsweise eine Regelstufe und eine Bandbreite der LWL-Verbindungen 31 und 32 umfassen. In diesem Beispiel ergibt die statistische Auswertung, dass die Dämpfung der Strecke für beide Adern 31 und 32 höher ist als der aus den gespeicherten Diagnosedaten ermittelte typische Wert, während die Bandbreite jeweils deutlich besser ist als der entsprechend ermittelte typische Wert. Dieses Fehlerbild lässt auf eine Verlegung des LWL-Kabels mit zu engen Biegeradien schließen, da diese zu einer Dämpfungserhöhung und zu einer Verbesserung der möglichen Übertragungsbandbreite führen. Eine Bewertung auf der Basis von Worst-Case-Grenzwerten hätte auch in diesem Beispiel zu keiner Fehleraufdeckung geführt.

Für die oben beschriebenen und andere bekannte Fehlerbilder werden vorzugsweise entsprechende Fehlerprofile hinterlegt, so dass eine beispielsweise in einer Auswerteeinheit ablaufende Diagnosesoftware nicht nur die statistische Analyse und die Berechnung typischer Grenzwerte leistet, sondern auch die Überprüfung aller Kommunikationsverbindungen auf bekannte Fehlerbilder durchführt und einem Anwender entsprechende Hinweise und Lösungsvorschläge liefert. Eine solche Diagnosesoftware kann vorteilhaft auf einer Einrichtung wie dem Master 11 ablaufen, die auch das Kommunikationssystem 10 verwaltet und somit den Zugriff auf alle Streckendaten hat. In diesem Fall ist die Diagnosesoftware beispielsweise in der Auswerteeinheit 42 hinterlegt. Alternativ kann die Diagnosesoftware auch auf einem zentralen, überlagerten System ablaufen. In diesem Fall ist die Diagnosesoftware beispielsweise in der Auswerteeinheit 41 hinterlegt.

Das in Fig. 1 dargestellte Kommunikationssystem 10 ist lediglich beispielhaft als Interbus-System ausgebildet. Die Erfindung ist jedoch nicht auf Interbus-Systeme beschränkt, sondern lässt sich auch in jedem anderen geeigneten Kommunikationssystem einsetzen, wie beispielsweise in einem auf Ethernet oder Bluetooth basierenden Kommunikationssystem.

In Fig. 2 ist beispielhaft eine für den Einsatz in einem auf Ethernet basierenden optischen Kommunikationssystem ausgebildete Diagnoseeinheit 60 dargestellt. Im dargestellten Ausführungsbeispiel ist die Diagnoseeinheit 60 als Diagnose-Chip ausgebildet, welcher im Datenpfad zwischen einem der physikalischen Schicht eines Netzwerks zugeordneten PHY-Transceiver 50 und einem optischen LWL-Transceiver 70 geschaltet ist. Zur Datenkommunikation sind in Bauteil 60 erste und zweite Schnittstellen 641 und 642 vorgesehen, über welche die PECL-Schnittstelle 74 des LWL-Transceivers 70 mit der PECL-Schnittstelle 54 des PHY-Transceivers 50 verbunden ist. Dadurch ist im Fall der normalen Ethernet-Kommunikation das als separater Diagnosechip ausgebildete Bauteil 60 für die Ethernet-Datensignale transparent.

Das Bauteil 60 umfasst ferner, insbesondere zur Abfrage der empfangenen Lichtleistung, eine erste serielle Schnittstelle 662 zum Anschluss an eine DMI-Schnittstelle 76 des optischen Transceivers 70. Außerdem ist eine zweite serielle Schnittstelle 661 zum Anschluss an eine serielle Schnittstelle 56 des PHY-Transceivers 50 vorgesehen.

In diesem Ausführungsbeispiel verwenden die Schnittstellen 76 und 662 das I²C-Übertragungsprotokoll und die Schnittstellen 56 und 661 das SPI-Übertragungsprotokoll. Zur Umsetzung zwischen diesen beiden Übertragungsprotokollen ist in Bauteil 60 ein entsprechender, nicht dargestellter, Umsetzer integriert.

Die in Fig. 2 beispielhaft dargestellte Diagnoseeinheit 60 ist vorteilhaft zur Ermittlung einer Dämpfung und einer Bandbreite einer optischen Faser ausgebildet. Für die Erfindung können vorteilhaft auch Diagnoseeinheiten eingesetzt werden, welche zur Ermittlung von Diagnosedaten eine Schnittstelle gemäß SFF-8472, revision 9.3 (Digital Diagnostic Monitoring Interface for Optical Transceivers) verwenden.

## Patentansprüche

1. Verfahren zur Diagnose von Kommunikationsverbindungen (31, 32) in einem Kommunikationssystem (10), umfassend die Schritte,
a) Bereitstellen einer Vielzahl von Diagnoseeinheiten und wenigstens einer weiteren Diagnoseeinheit, wobei die Diagnoseeinheiten (21-28) unterschiedlichen Kommunikationsverbindungen (31, 32) des Kommunikationssystems (10) zugeordnet und dazu ausgebildet sind, einen Wert wenigstens einer Diagnosegröße der jeweils zugeordneten Kommunikationsverbindungen zu ermitteln,
b) Ermitteln eines Wertes der wenigstens einen Diagnosegröße durch jede der Vielzahl von Diagnoseeinheiten,
c) Ermitteln eines Wertes der wenigstens einen Diagnosegröße durch die wenigstens eine weitere Diagnoseeinheit,
d) Übertragen der durch die Diagnoseeinheiten ermittelten Werte zu einer Auswerteeinheit (41, 42),
e) statistisches Auswerten der durch die Vielzahl von Diagnoseeinheiten ermittelten Werte durch die Auswerteeinheit (41, 42), wobei das statistische Auswerten durch die Auswerteinheit (41, 42) das Ermitteln eines oberen und/oder unteren Grenzwertes für die wenigstens eine Diagnosegröße umfasst, wobei als oberer Grenzwert für die wenigstens eine Diagnosegröße ein Wert ermittelt wird, unter welchem ein vorgegebener Anteil der durch die Vielzahl von Diagnoseeinheiten ermittelten Werte der jeweiligen Diagnosegröße liegen, oder als unterer Grenzwert für die wenigstens eine Diagnosegröße ein Wert ermittelt wird, über welchem ein vorgegebener Anteil der durch die Vielzahl von Diagnoseeinheiten ermittelten Werte der jeweiligen Diagnosegröße liegen, und wobei der vorgegebene Anteil unter 100 % liegt, und
f) Diagnose der durch die wenigstens eine weitere Diagnoseeinheit ermittelten Werte in Abhängigkeit der statistischen Auswertung durch die Auswerteeinheit (41, 42) zum Erkennen vorgegebener Fehlerarten, wobei die Diagnose das Vergleichen der durch die wenigstens eine weitere Diagnoseeinheit ermittelten Werte mit dem oberen und/oder unteren Grenzwert umfasst, wobei die Schritte b) bis f) in vorgegebenen Zeitabständen und/oder bei einer Änderung der Konfiguration des Kommunikationssystems (10) wiederholt werden.

2. Verfahren nach Anspruch 1, wobei der vorgegebene Anteil unter 95 %, insbesondere unter 90 %, insbesondere unter 85 %, insbesondere unter 80 % liegt.

3. Verfahren nach einem der Ansprüche 1 oder 2, wobei das statistische Auswerten durch die Auswerteinheit (41, 42) das Ermitteln eines Durchschnittswertes wenigstens einer Diagnosegröße umfasst.

4. Verfahren nach einem der vorstehenden Ansprüche, wobei die wenigstens eine Diagnosegröße wenigstens eine Größe oder eine zeitliche Änderung einer Größe umfasst, wobei die Größe aus einer Gruppe ausgewählt ist, welche die Größen
- Sendeleistung,
- Empfangsleistung
- Streckenlänge der jeweiligen Kommunikationsverbindung, - Bitfehlerrate,
- Prüfsummenfehlerrate,
- Dämpfung und
- Übertragungsbandbreite
umfasst.

5. Verfahren nach einem der vorstehenden Ansprüche, wobei für wenigstens eine Duplex-Kommunikationsverbindung (31, 32) mit einer ersten und einer zweiten Datenrichtung für die erste Datenrichtung ein erster Wert und für die zweite Datenrichtung ein zweiter Wert wenigstens einer Diagnosegröße ermittelt wird, und wobei die Diagnose das Vergleichen des ersten und zweiten Wertes miteinander und/oder mit einem durch das statistische Auswerten ermittelten oberen und/oder unteren Grenzwert und/oder Durchschnittswert umfasst.

6. Verfahren nach einem der vorstehenden Ansprüche, wobei die weitere Diagnoseeinheit (21-28) oder eine zentrale Einrichtung (11) des Kommunikationssystems oder eines überlagerten Kommunikationssystems (40) die Auswerteeinheit (42; 41) umfasst.

7. Verfahren nach einem der vorstehenden Ansprüche, wobei zur Erkennung einer vorgegebenen Fehlerart für wenigstens eine Diagnosegröße ein Grenzwert für die Abweichung von einem durch das statistische Auswerten ermittelten Durchschnittswertes der jeweiligen Diagnosegröße definiert wird.

8. Verfahren nach einem der vorstehenden Ansprüche, wobei die Kommunikationsverbindungen drahtlos oder als optische Verbindungen ausgebildet sind.

9. Elektronisches Bauteil (11, 40), ausgebildet zur Durchführung eines Verfahrens gemäß einem der Ansprüche 1 bis 8, umfassend
- eine Empfangseinheit zum Empfangen von Werten wenigstens einer Diagnosegröße einer Vielzahl von Kommunikationsverbindungen eines Kommunikationssystems,
- einen Speicher zum Speichern der empfangenen Werte, und
- eine Auswerteeinheit (41, 42) zum statistischen Auswerten aller empfangenen Werte und zur Diagnose der empfangenen Werte wenigstens einer ausgewählten Kommunikationsverbindung in Abhängigkeit der statistischen Auswertung zum Erkennen vorgegebner Fehlerarten, wobei das statistische Auswerten das Ermitteln eines oberen und/oder unteren Grenzwertes für wenigstens eine Diagnosegröße umfasst, wobei als oberer Grenzwert für die wenigstens eine Diagnosegröße ein Wert ermittelt wird, unter welchem ein vorgegebener Anteil der empfangenen Werte der wenigstens einen Diagnosegröße der Vielzahl von Kommunikationsverbindungen liegen, oder als unterer Grenzwert für die wenigstens eine Diagnosegröße ein Wert ermittelt wird, über welchem ein vorgegebener Anteil der empfangenen Werte der wenigstens einen Diagnosegröße der Vielzahl von Kommunikationsverbindungen liegen, und wobei der vorgegebene Anteil unter 100 % liegt, und wobei die Diagnose das Vergleichen der empfangenen Werte der ausgewählten Kommunikationsverbindung mit dem oberen und/oder unteren Grenzwert umfasst.

10. Kommunikationssystem (10), ausgebildet zur Durchführung eines Verfahrens gemäß einem der Ansprüche 1 bis 8, umfassend
- eine Vielzahl von Kommunikationsverbindungen (31, 32),
- eine Vielzahl von Diagnoseeinheiten (21-28), die jeweils unterschiedlichen der Vielzahl von Kommunikationsverbindungen zugeordnet und dazu ausgebildet sind, einen Wert wenigstens einer Diagnosegröße der jeweils zugeordneten Kommunikationsverbindungen zu ermitteln, und
- wenigstens ein elektronisches Bauteil gemäß Anspruch 10,
wobei
die Diagnoseeinheiten dazu ausgebildet sind, ermittelte Werte der wenigstens einen Diagnosegröße zu der Auswerteeinheit des wenigstens einen elektronischen Bauteils zu übertragen.

## Claims

1. A method for diagnosing of communication connections (31, 32) in a communication system (10), comprising the steps of:
a) providing a plurality of diagnosing units and at least one further diagnosing unit, wherein the diagnosing units (21 - 28) are assigned to different communication connections (31, 32) of the communication system (10) and are adapted to determine a value of at least one diagnosis variable of the respective assigned communication connections;
b) determining a value of the at least one diagnosis variable by each of the plurality of diagnosing units;
c) determining a value of the at least one diagnosis variable by the at least one further diagnosing unit;
d) transferring the values determined by each of the diagnosing units to an evaluation unit (41, 42);
e) statistically evaluating, by the evaluation unit (41, 42), the values as determined by the plurality of diagnosing units, wherein the statistical evaluation by the evaluation unit (41, 42) comprises determining an upper limit value and/or a lower limit value for the at least one diagnosis variable, wherein as an upper limit value for the at least one diagnosis variable a value is determined below which a predetermined proportion of the values of the respective diagnosis variable as determined by the plurality of diagnosing units lies, or wherein as a lower limit value for the at least one diagnosis variable a value is determined above which a predetermined proportion of the values of the respective diagnosis variable as determined by the plurality of diagnosing units lies, and wherein the predetermined proportion is less than 100 %; and
f) diagnosing the values determined by the at least one further diagnosing unit based on the statistical evaluation by the evaluation unit (41, 42) for detecting predefined error types, wherein the diagnosing comprises comparing the values determined by the at least one further diagnosing unit with the upper and/or lower limit values, wherein steps b) to f) are repeated in predetermined time intervals and/or in case of a change of the configuration of the communication system (10).

2. The method according to claim 1, wherein the predetermined proportion is less than 95 %, in particular less than 90 %, in particular less than 85 %, in particular less than 80 %.

3. The method according to any of claims 1 or 2, wherein the statistical evaluation by the evaluation unit (41, 42) comprises determining an average value of at least one diagnosis variable.

4. The method according to any of the preceding claims, wherein the at least one diagnosis variable comprises at least one variable or a temporal change of a variable, wherein the variable is selected from a group comprising the variables:
- transmitting power,
- receiving power,
- path length of the respective communication connection,
- bit error rate,
- checksum error rate
- attenuation, and
- transmission bandwidth.

5. The method according to any of the preceding claims,
wherein for at least one duplex communication connection (31, 32) with a first and a second data direction, a first value for the first data direction and a second value for the second data direction of at least one diagnosis variable is determined, and wherein the diagnosis comprises comparing the first and second values to each other and/or to an upper and/or a lower limit value and/or an average value determined by the statistical evaluation.

6. The method according to any of the preceding claims,
wherein the further diagnosing unit (21 - 28) or a central device (11) of the communication system or of a superimposed communication system (40) comprises the evaluation unit (42; 41).

7. The method according to any of the preceding claims,
wherein for detecting a predefined error type, a limit value for a deviation from an average value of the respective diagnosis variable as determined by the statistical evaluation is defined for at least one diagnosis variable.

8. The method according to any of the preceding claims,
wherein the communication connections are configured as wireless connections or optical connections.

9. An electronic component (11, 40), adapted for carrying out a method according to any of claims 1 to 8, comprising:
- a receiver unit for receiving values of at least one diagnosis variable of a plurality of communication connections of a communication system;
- a memory for storing the received values; and
- an evaluation unit (41, 42) for statistically evaluating all received values and for diagnosing the received values of at least one selected communication connection based on the statistical evaluation for detecting predefined error types, wherein the statistical evaluation comprises determining an upper and/or lower limit value for at least one diagnosis variable;
wherein as an upper limit value for the at least one diagnosis variable a value is determined below which a predetermined proportion of the received values of the at least one diagnosis variable of the plurality of communication connections lies, or as a lower limit value for the at least one diagnosis variable a value is determined above which a predetermined proportion of the received values of the at least one diagnosis variable of the plurality of communication connections lies, and wherein the predetermined proportion is less than 100 %; and wherein the diagnosing comprises comparing the received values of the selected communication connection with the upper and/or lower limit values.

10. A communication system (10), configured for carrying out a method according to claims 1 to 8, comprising:
- a plurality of communication connections (31, 32);
- a plurality of diagnosing units (21 - 28) that are each assigned to different ones of the plurality of communication connections and are adapted to determine a value of at least one diagnosis variable of the respectively assigned communication connections; and
- at least one electronic component according to claim 9; wherein
the diagnosing units are adapted to transfer determined values of the at least one diagnosis variable to the evaluation unit of the at least one electronic component.

## Revendications

1. Procédé de diagnostic de liaisons de communication (31, 32) dans un système de communication (10), comprenant les étapes suivantes :
a) préparation d'une pluralité d'unités de diagnostic et d'au moins une autre unité de diagnostic, les unités de diagnostic (21-28) étant associées à différentes liaisons de communication (31, 32) du système de communication (10) et étant prévues pour déterminer une valeur d'au moins une grandeur de diagnostic des liaisons de communication correspondantes associées,
b) détermination d'une valeur de l'au moins une grandeur de diagnostic par chaque unité de la pluralité d'unités de diagnostic,
c) détermination d'une valeur de l'au moins une grandeur de diagnostic par l'au moins une autre unité de diagnostic,
d) transmission des valeurs déterminées par les unités de diagnostic à une unité d'évaluation (41, 42),
e) évaluation statistique des valeurs déterminées par la pluralité d'unités de diagnostic par l'unité d'évaluation (41, 42), l'évaluation statistique par l'unité d'évaluation (41, 42) comprenant la détermination d'une valeur limite supérieure et/ou inférieure pour l'au moins une grandeur de diagnostic, une valeur étant déterminée comme valeur limite supérieure pour l'au moins une grandeur de diagnostic, en dessous de laquelle se trouve une part définie des valeurs de la grandeur de diagnostic respective déterminées par la pluralité d'unités de diagnostic, ou une valeur étant déterminée comme valeur limite inférieure pour l'au moins une grandeur de diagnostic, au-dessus de laquelle se trouve une part définie des valeurs de la grandeur de diagnostic respective déterminées par la pluralité d'unités de diagnostic, et la part définie étant inférieure à 100 %, et
f) diagnostic des valeurs déterminées par l'au moins une autre unité de diagnostic en fonction de l'évaluation statistique par l'unité d'évaluation (41, 42) pour la détection de types d'erreur définis, le diagnostic comprenant la comparaison des valeurs déterminées par l'au moins une autre unité de diagnostic avec la valeur limite supérieure et/ou valeur limite inférieure, les étapes b) à f) étant répétées à intervalles temporels définis et/ou en cas de modification de la configuration du système de communication (10).

2. Procédé selon la revendication 1, dans lequel la part définie est inférieure à 95 %, en particulier inférieure à 90 %, en particulier inférieure à 85 %, en particulier inférieure à 80 %.

3. Procédé selon la revendication 1 ou 2, dans lequel l'évaluation statistique par l'unité d'évaluation (41, 42) comprend la détermination d'une valeur moyenne d'au moins une grandeur de diagnostic.

4. Procédé selon l'une des revendications précédentes, dans lequel l'au moins une grandeur de diagnostic comprend au moins une grandeur ou une modification temporelle d'une grandeur, la grandeur étant sélectionnée dans un groupe comprenant les grandeurs :
- puissance d'émission,
- puissance de réception,
- longueur de trajet de la liaison de communication correspondante,
- taux d'erreur binaire,
- taux d'erreur de somme de contrôle,
- atténuation, et
- largeur de bande de transmission.

5. Procédé selon l'une des revendications précédentes, dans lequel pour au moins une liaison de communication duplex (31, 32) avec un premier et un deuxième sens de transmission de données, une première valeur d'au moins une grandeur de diagnostic est déterminée pour le premier sens de transmission de données et une deuxième valeur pour le deuxième sens de transmission de données, et dans lequel le diagnostic comprend la comparaison de la première et de la deuxième valeur entre elles et/ou avec une valeur limite supérieure et/ou une valeur limite inférieure et/ou une valeur moyenne déterminées par l'évaluation statistique.

6. Procédé selon l'une des revendications précédentes, dans lequel l'autre unité de diagnostic (21-28) ou un dispositif central (11) du système de communication ou d'un système de communication superposé (40) comprend l'unité d'évaluation (42 ; 41).

7. Procédé selon l'une des revendications précédentes, dans lequel, pour la détection d'un type d'erreur défini pour au moins une grandeur de diagnostic, une valeur limite est définie pour l'écart par rapport à une valeur moyenne de la grandeur de diagnostic respective déterminée par l'évaluation statistique.

8. Procédé selon l'une des revendications précédentes, dans lequel les liaisons de communication sont prévues sans fil ou comme liaisons optiques.

9. Composant électronique (11, 40), prévu pour l'exécution d'un procédé selon l'une des revendications 1 à 8, comprenant :
- une unité de réception, pour la réception de valeurs d'au moins une grandeur de diagnostic d'une pluralité de liaisons de communication d'un système de communication,
- une mémoire, pour la sauvegarde des valeurs reçues, et
- une unité d'évaluation (41, 42), pour l'évaluation statistique de toutes les valeurs reçues et pour le diagnostic des valeurs reçues d'au moins une liaison de communication sélectionnée en fonction de l'évaluation statistique pour la détection de types d'erreur définis, l'évaluation statistique comprenant la détermination d'une valeur limite supérieure et/ou d'une valeur limite inférieure pour au moins une grandeur de diagnostic, une valeur étant déterminée comme valeur limite supérieure pour l'au moins une grandeur de diagnostic, en dessous de laquelle se trouve une part définie des valeurs reçues de l'au moins une grandeur de diagnostic de la pluralité de liaisons de communication, ou une valeur étant déterminée comme valeur limite inférieure pour l'au moins une grandeur de diagnostic, au-dessus de laquelle se trouve une part définie des valeurs reçues de l'au moins une grandeur de diagnostic de la pluralité de liaisons de communication, la part définie étant inférieure à 100 %, et le diagnostic comprenant la comparaison des valeurs reçues de la liaison de communication sélectionnée avec la valeur limite supérieure et/ou la valeur limite inférieure.

10. Système de communication (10), prévu pour l'exécution d'un procédé selon l'une des revendications 1 à 8, comprenant :
- une pluralité de liaisons de communication (31, 32),
- une pluralité d'unités de diagnostic (21-28), associées à différentes liaisons de la pluralité de liaisons de communication et prévues pour déterminer une valeur d'au moins une grandeur de diagnostic des liaisons de communication correspondantes associées, et
- au moins un composant électronique selon la revendication 10,
dans lequel :
les unités de diagnostic sont prévues pour transmettre les valeurs déterminées de l'au moins une grandeur de diagnostic à l'unité d'évaluation de l'au moins un composant électronique.
